# FASCICULE DE BREVET EUROPEEN

(11) **EP 0 757 509 B1**
(45) Date de publication et mention de la délivrance du brevet: **06.05.2004**
(21) Numéro de dépôt: 96420260.0
(22) Date de dépôt: 31.07.1996
(51) Int. Cl.: H05B 6/12, H05B 6/06, A47B 31/02

(54) **Dispositif de chauffage à induction de plateaux repas**
Vorrichtung zum induktiven Erwärmen von Speisegeschirr auf Tabletts
Induction apparatus for heating meals on trays

(30) Priorité: 03.08.1995 FR 9509702
(43) Date de publication de la demande: 05.02.1997
(73) Titulaire: SOCIETE COOPERATIVE DE PRODUCTION BOURGEOIS, 74210 Faverges (FR)
(72) Inventeur: Chavanaz, Jean-Pierre, 74210 Doussard (FR); Losserand, Laurent, Soney, 73400 Ugine (FR)
(74) Mandataire: Poncet, Jean-François

(56) Documents cités:
- EP-A- 0 285 552
- EP-A- 0 486 548
- DE-A- 2 711 088
- DE-A- 3 610 196
- DE-A- 3 612 707
- DE-A- 4 428 353
- FR-A- 2 657 486
- US-A- 4 115 677

## Description

La présente invention concerne les dispositifs permettant de mettre à température des aliments disposés sur des plateaux repas, en particulier pour la distribution de repas dans les collectivités, les cantines d'entreprises, les hôpitaux.

On connaît déjà de tels dispositifs de mise à température d'aliments, décrits par exemple dans le document DE-A-27 11 088, comprenant des moyens pour supporter une série de plateaux les uns au-dessus des autres selon un écartement approprié, et une série de tablettes d'induction contenant des bobines d'induction connectées à un générateur de courant haute fréquence pour générer un champ magnétique alternatif haute fréquence, les tablettes d'induction venant s'engager entre les plateaux successifs dans une zone de réchauffage des plateaux.

Les aliments à réchauffer sont disposés sur des assiettes en matière plastique dont la face supérieure est recouverte d'une écuelle en aluminium mince, les assiettes étant recouvertes d'un couvercle amovible isolant dont la face inférieure est revêtue d'une feuille métallique.

Dans la zone de réchauffage des plateaux, les bobines d'induction parcourues par un courant électrique à haute fréquence génèrent un champ magnétique alternatif haute fréquence qui échauffe par induction la couche inférieure métallique revêtant l'assiette et la couche supérieure métallique amovible revêtant intérieurement le couvercle.

Dans un tel dispositif de chauffage à induction, l'ensemble comprenant les bobines inductrices et les couches métalliques inférieure et supérieure portées par les plateaux forme- un circuit magnétique dont l'impédance est différente selon que des plateaux sont présents au voisinage des bobines, ou selon que certains plateaux sont absents ou ne portent pas de partie métallique. Cette différence d'impédance modifie le fonctionnement du générateur de courant électrique à haute fréquence qui alimente l'ensemble des bobines, de sorte qu'il n'est pas possible d'obtenir un fonctionnement optimal dans tous les cas d'utilisation, c'est-à-dire à la fois en présence de tous les.plateaux et en l'absence de certains au moins des plateaux. Et il en résulte une variation de la vitesse de remise en température des aliments, en fonction du nombre de plateaux présents dans la série de plateaux.

D'autre part, en l'absence de certains plateaux, les bobines inductrices génèrent un champ magnétique perturbateur qui se propage dans l'environnement du dispositif. On constate ainsi des perturbations électromagnétiques générées par un tel dispositif.

Le problème proposé par la présente invention est de concevoir un nouveau procédé et un dispositif permettant d'éviter de façon automatique les variations de vitesse de remise à température des aliments en cas d'absence de certains au moins des plateaux de la série de plateaux à réchauffer.

On cherche simultanément à éviter la génération de perturbations électromagnétiques, notamment en l'absence de certains plateaux.

Subsidiairement, on cherche également à rendre automatique le fait de chauffer ou de ne pas chauffer certains plateaux, au gré de l'utilisateur.

Enfin, le dispositif peut être prévu pour mettre aussi à température une partie froide de plateau, sur laquelle sont disposés des aliments devant rester plus froids mais amenés cependant à température de consommation appropriée.

Pour atteindre ces objets ainsi que d'autres, un dispositif de mise à température d'aliments disposés sur des plateaux repas comprend, selon l'invention :
- des moyens pour supporter une série de plateaux les uns au-dessus des autres selon un écartement approprié, les aliments à réchauffer pouvant être disposés sur chaque plateau correspondant en une zone de réchauffage des plateaux,
- une pluralité de générateurs d'induction, contenant chacun au moins un groupe de bobines d'induction connecté à un générateur électrique de courant haute fréquence et engagé à proximité des plateaux successifs dans la zone de réchauffage des plateaux, pour produire un champ magnétique alternatif haute fréquence provoquant le réchauffage d'éléments en matériau réchauffable par induction magnétique placés à proximité des aliments ;
- les groupes de bobines d'induction de chaque générateur d'induction sont alimentés en énergie électrique haute fréquence séparément des groupes de bobines d'induction des autres générateurs d'induction,
- un moyen de détection est associé au moins à certains groupes de bobines d'induction contrôlés de générateurs d'induction, pour détecter la présence ou l'absence d'un élément adjacent correspondant en matériau réchauffable par induction magnétique,
- des moyens de commande et de commutation inhibent automatiquement l'alimentation des groupes de bobines d'induction pour lesquels le moyen de détection a détecté l'absence d'un élément adjacent correspondant de matériau réchauffable par induction magnétique.

Selon un mode de réalisation avantageux, les moyens de détection comprennent des moyens de mesure et de comparaison du courant débité dans chaque groupe de bobines d'induction contrôlé, adaptés pour générer un signal de présence lorsque le courant est compris dans une première plage de valeurs normales de courant en présence d'un élément adjacent correspondant en matériau réchauffable par induction magnétique, et adaptés pour générer un signal d'absence lorsque le courant est compris dans une seconde plage de valeurs normales de courant en l'absence d'un élément adjacent correspondant en matériau réchauffable par induction magnétique.

De préférence, un dispositif de multiplexage est inséré électriquement entre les groupes de bobines d'induction et un ou plusieurs générateurs électriques de courant haute fréquence, agencé pour alimenter les bobines d'induction séparément en séquence en conservant une charge sensiblement constante de chaque générateur électrique quelque soit le nombre de bobines d'induction à alimenter.

Les moyens de commande peuvent avantageusement être adaptés pour inhiber l'alimentation de certains groupes de bobines d'induction au choix de l'utilisateur.

Selon un premier mode de réalisation :
- les générateurs d'induction comprennent au moins des groupes de bobines d'induction inférieures associées à des éléments conducteurs du champ magnétique placés au-dessus des bobines d'induction inférieures,.
- les groupes de bobines d'induction contrôlés-sont les groupes de bobines d'induction inférieures,
- sur chaque plateau, les aliments que l'on désire réchauffer sont en outre placés sous une couche supérieure amovible de matériau réchauffable par induction magnétique.

Les couches supérieures amovibles de matériau réchauffable par induction magnétique peuvent avantageusement être placées en partie inférieure de cloches en matière isolante recouvrant la zone de réchauffage des plateaux.

Selon un second mode de réalisation :
- les générateurs d'induction comprennent des groupes de bobines d'induction supérieures associées à des éléments conducteurs du champ magnétique placés au-dessous des bobines d'induction supérieures,
- chaque plateau comporte dans sa zone de réchauffage, un élément en matériau réchauffable par induction magnétique.

Les deux modes de réalisation peuvent être combinés, en prévoyant des générateurs d'induction comportant simultanément des bobines d'induction inférieures et des bobines d'induction supérieures, et en prévoyant des éléments en matériau réchauffable par induction magnétique placés à la fois dans les plateaux et dans les cloches.

D'autres objets, caractéristiques et avantages de la présente invention ressortiront de la description suivante de modes de réalisation particuliers, faite en relation avec les figures jointes, parmi lesquelles:
- la figure 1 est une vue schématique d'un dispositif de chauffage à induction de plateaux repas selon un mode de réalisation de la présente invention ;
- la figure 2 est une vue de côté partielle en coupe, illustrant la structure d'un générateur d'induction en forme de tablette selon le mode de réalisation de la figure 1 ;
- la figure 3 illustre une bobine de la figure 2 en vue de dessus ;
- la figure 4 est une vue de côté en coupe d'un dispositif de remise à température selon l'invention, dans un mode de réalisation de type chariot-console ;
- la figure 5 est une vue en perspective du chariot de la figure 4 ;
- la figure 6 est une vue en perspective de la console de la figure 4 et
- la figure 7 est une vue de dessus en coupe de l'ensemble chariot-console de la figure 4.

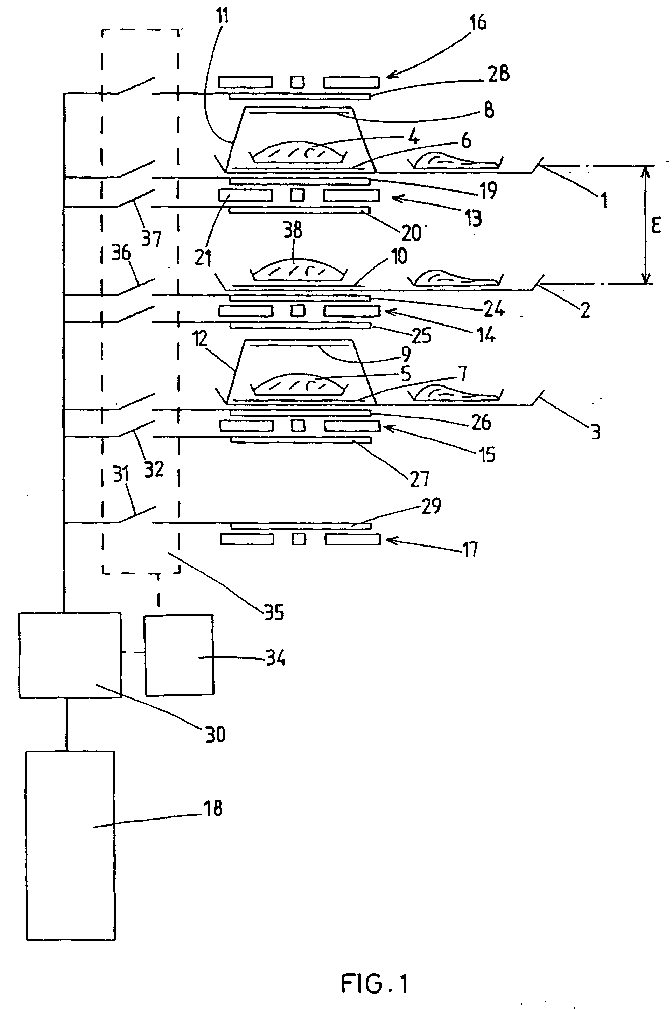

Dans le mode de réalisation illustré sur la figure 1, le dispositif de mise à température d'aliments selon l'invention permet de remettre à température des aliments disposés sur des plateaux repas tels que les plateaux 1, 2 et 3. Les plateaux 1, 2, 3 sont tenus par des moyens permettant de les supporter les uns au-dessus des autres selon un écartement E approprié.

Les aliments à réchauffer, respectivement 4 et 5, sont disposés sur les plateaux correspondants 1 et 3 en une zone de réchauffage des plateaux, sur la partie gauche de la figure 1, entre une couche inférieure 6 ou 7 de matériau réchauffable par induction magnétique et une couche supérieure 8 ou 9 amovible de matériau réchauffable par induction magnétique.

Le matériau réchauffable par induction magnétique pourra être choisi parmi les matériaux habituellement utilisés pour le chauffage par induction magnétique, présentant une bonne susceptibilité magnétique et une résistivité électrique appropriée.

Dans le mode de réalisation illustré, chaque couche inférieure 6 ou 7 de matériau réchauffable par induction magnétique est placée en partie supérieure ou dans la structure des plateaux correspondants 1 et 3, dans la zone de réchauffage des plateaux. On notera que le plateau intermédiaire 2 comporte également une couche supérieure ou intérieure de matériau réchauffable par induction magnétique, formant une couche inférieure 10 de matériau réchauffable par induction magnétique.

Les couches supérieures 8 et 9 amovibles de matériau réchauffable par induction magnétique sont placées en partie inférieure de cloches respectives 11 et 12 en matière isolante recouvrant la zone de réchauffage des plateaux correspondants 1 et 3. Le plateau 2 est dépourvu de cloche, à titre d'exemple.

Des générateurs intermédiaires d'induction 13, 14 et 15-, en forme générale de tablette, sont engagés entre les-plateaux successifs dans la zone de réchauffage des plateaux. De même, des générateurs extrêmes d'induction 16 et 17 en forme générale de tablette sont engagés aux extrémités de la pile des plateaux.

Les générateurs d'induction 13, 14, 15, 16 et 17 contiennent des groupes de bobines d'induction connectés à un ou plusieurs générateurs électriques 18 de courant haute fréquence pour produire un champ magnétique alternatif haute fréquence provoquant le réchauffage des couches inférieures 6 et 7 et/ou supérieures 8 et 9 de matériau réchauffable par induction magnétique, lesdites couches inférieures et/ou supérieures provoquant par conduction le réchauffage des aliments 4 et 5 qui sont placés à proximité.

Les bobines d'induction peuvent avoir une structure connue dans les dispositifs de chauffage par induction magnétique, par exemple une structure d'enroulement plat de conducteur en spirale, d'axe vertical.

L'écartement E entre les plateaux tels que les plateaux 1 et 2 est choisi de façon que les couches inférieures 6 et 7 de matériau réchauffable par induction magnétique soient à proximité des générateurs d'induction correspondants intermédiaires 13 et 15 qui se trouvent au-dessous, et/ou que les couches supérieures 8 et 9 de matériau réchauffable.. par induction magnétique soient à proximité des générateurs d'induction respectifs 16 et 14 qui se trouvent au-dessus.

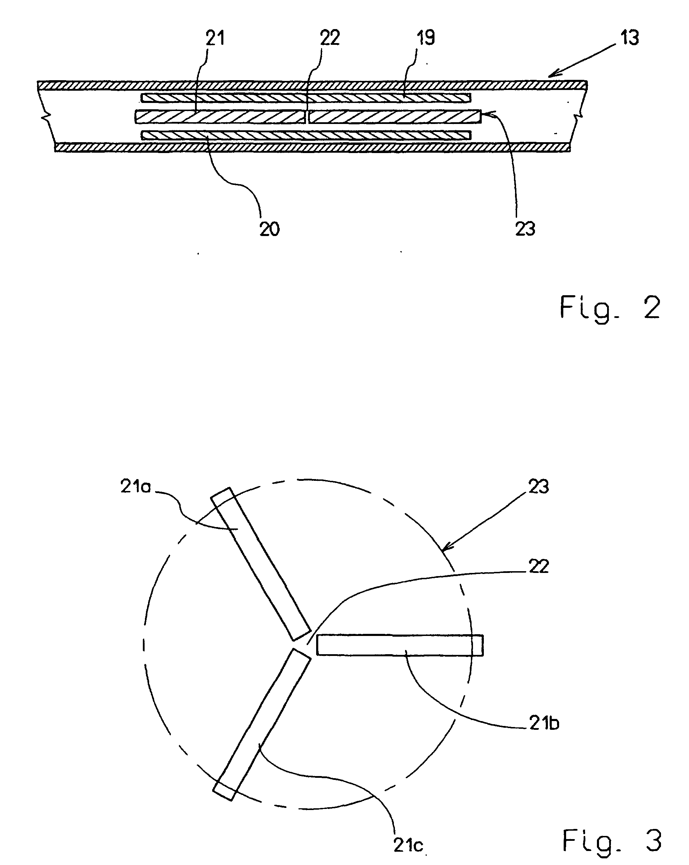

Comme le représentent les figures 1 et 2; dans les générateurs d'induction intermédiaires tels que le générateur d'induction 13, les bobines d'induction 19 et 20 sont disposées par groupes de bobines d'induction décalés verticalement comprenant au moins un groupe de bobines d'induction supérieures 19 et au moins un groupe de bobines d'induction inférieures 20.

Les groupes de bobines d'induction 19 et 20 de chaque générateur d'induction intermédiaire sont séparés par des éléments intercalaires conducteurs du champ magnétique 21, agencés pour dévier radialement le champ magnétique entre les groupes de bobines d'induction supérieures 19 et inférieures 20. Dans le mode de réalisation illustré sur la figure 3, les éléments intercalaires conducteurs de champ magnétique 21 comprennent au moins trois barreaux de ferrite 21a, 21b et 21c, disposés en étoile depuis le centre 22 des bobines d'induction 19 ou 20 jusqu'à leur périphérie 23. D'autres géométries d'éléments conducteurs du champ magnétique peuvent être utilisées.

Dans le mode de réalisation illustré sur la figure 1, le générateur d'induction intermédiaire 13 comprend ainsi les deux groupes de bobines d'induction supérieures 19 et inférieures 20, le générateur d'induction intermédiaire 14 comprend deux groupes de bobines d'induction supérieures 24 et inférieures 25, le générateur d'induction intermédiaire 15 comprend deux groupes de bobines d'induction supérieures 26 et inférieures 27, le générateur d'induction supérieur 16 comprenant seulement un groupe de bobines d'induction inférieures 28, le générateur d'induction inférieur 17 comprenant seulement un groupe de bobines d'induction supérieures 29. On comprendra que le dessin figure à titre d'exemple une seule bobine par groupe de bobines, et que notamment chaque bobine d'induction peut être remplacée par un groupe de plusieurs bobines décalées latéralement et réparties dans la tablette correspondante pour chauffer une plus grande surface.

Les éléments intercalaires conducteurs de champ magnétique 21 permettent d'une part d'augmenter le rendement de chaque bobine d'induction, en refermant le champ magnétique entre la bobine d'induction et la couche correspondante de matériau réchauffable par induction magnétique, et d'autre part de découpler magnétiquement les bobines d'induction du groupe de bobines d'induction supérieures 19 par rapport aux bobines d'induction du groupe de bobines d'induction inférieures 20 de chaque générateur d'induction intermédiaire tel que le générateur d'induction 13. Ainsi, le champ magnétique généré par les groupes de bobines d'induction inférieures 20 est rendu sensiblement indépendant du champ magnétique généré par les groupes de bobines d'induction supérieures, et inversement. En outre, l'impédance électrique apparente vue des bornes d'un groupe de bobines d'induction est sensiblement indépendante de la présence ou de l'absence d'un plateau ou d'une cloche au regard de l'autre groupe de bobines d'induction du même générateur d'induction, et sensiblement indépendante de l'alimentation ou de la non-alimentation de l'autre groupe de bobines d'induction du même générateur d'induction.

Dans le mode de réalisation représenté sur la figure 1, les groupes de bobines d'induction de chaque générateur d'induction 13 à 16 sont alimentés séparément en énergie électrique haute fréquence, à partir d'un ou plusieurs générateurs électriques haute fréquence tels que le générateur électrique 18, par l'intermédiaire d'un dispositif de commutation 35 associé à des moyens de commande 34.

Selon une possibilité avantageuse, les moyens de commande 34 commandent le dispositif de commutation 35 de façon à réaliser un dispositif de multiplexage inséré dans le circuit électrique entre les groupes de bobines d'induction et le ou les générateurs électriques 18 de courant haute fréquence. Le dispositif de multiplexage, constitué par les moyens de commandes 34 et le dispositif de commutation 35, est agencé pour alimenter les groupes de bobines d'induction séparément en séquence, conservant ainsi une charge sensiblement constante pour le générateur électrique 18, quelque soit le nombre de groupes de bobines à alimenter. On assure ainsi que le générateur électrique 18 travaille en permanence dans les meilleures conditions de charge et de rendement.

La commutation d'énergie électrique sur un groupe de bobines donné peut durer par exemple une seconde, et ensuite l'énergie est commutée sur un groupe de bobines suivant, puis sur un groupe de bobines suivant et ainsi de suite.

En présence d'un nombre assez important de plateaux, on peut utiliser plusieurs générateurs électriques tels que le générateur électrique 18.

Selon une autre possibilité, le groupe de bobines d'induction inférieures tel que le groupe de bobines d'induction 20 d'un générateur d'induction et le groupe de bobines d'induction supérieures tel que le groupe de bobines d'induction 24 du générateur d'induction adjacent 14 peuvent être alimentés ensemble.

Dans le mode de réalisation représenté, un moyen de détection 30 est inséré entre le générateur électrique 18 et le dispositif de commutation 35, pour détecter la présence ou l'absence d'un élément adjacent correspondant en matériau réchauffable par induction magnétique, telles que la couche supérieure 8 pour le groupe de bobines d'induction 28, la couche supérieure 9 pour le groupe de bobines d'induction 25, les couches inférieures 6, 7 et 10 pour les groupes de bobines d'induction 19, 26 et 24.

Selon un mode de réalisation avantageux, le moyen de détection 30 comprend des moyens de mesure et de comparaison du courant débité par le générateur électrique 18 dans chaque groupe de bobines d'induction contrôlé, et adaptés pour générer un signal de présence lorsque le courant - est compris dans une première plage de valeurs normales de courant en présence d'un élément adjacent correspondant en matériau réchauffable par induction magnétique, et adaptés pour générer un signal d'absence lorsque le courant est compris dans une seconde plage de valeurs normales de courant en l'absence d'un élément adjacent correspondant en matériau réchauffable par induction magnétique. Un signal de défaut peut être généré en cas de défaut dans un groupe de bobines. L'homme du métier pourra aisément mesurer les courant normaux correspondants en présence et en l'absence d'une cloche ou d'un plateau, et en déduire les seuils correspondants de courant à contrôler pour produire les signaux de présence et d'absence envoyés aux moyens de commande 34.

Au cours d'une étape préliminaire de fonctionnement, les groupes de bobines d'induction sont alimentés un court instant un par un, les uns après les autres. Le moyen de détection 30 génère les signaux de présence ou d'absence correspondants, et ces signaux sont envoyés aux moyens de commande 34 qui comprennent des mémoires appropriées, un microprocesseur ou microcontrôleur adapté pour gérer les signaux, et une première séquence de programme appropriée. Cette première séquence de programme génère les signaux. de commande du dispositif de commutation 35 pour multiplexer l'alimentation des groupes de bobines, et mémorise dans les mémoires appropriées les signaux de présence et d'absence provenant du moyen de détection 30, en les associant aux groupes de bobines correspondants.

Par exemple, sur la figure 1, aucun plateau n'a été inséré entre le générateur d'induction 15 et le générateur.d'induction 17, de sorte que le moyen de détection 30 détecte qu'aucun élément supérieur de matériau réchauffable par induction magnétique n'est placé à proximité du groupe de bobines 29 du générateur d'induction 17 et du groupe de bobines inférieures 27 du générateur d'induction 15, et génère les signaux d'absence correspondants.

De même, aucune cloche n'a été placée sur le plateau intermédiaire 2. Il en résulte que le moyen de détection 30 détecte qu'aucun élément supérieur de matériau réchauffable par induction magnétique ne se trouve à proximité du groupe de bobines d'induction inférieures 20 et génère un signal d'absence correspondant.

Par contre, des couches de matériau réchauffable par induction magnétique 8, 6, 10, 9 et 7 sont adjacentes aux groupes de bobines d'induction respectifs 28, 19, 24, 25 et 26, de sorte que le moyen de détection 30 génère des signaux de présence correspondants.

Les moyens de commande 34 comprennent une seconde séquence de programme pour déterminer les groupes de bobines qu'il faut alimenter lors de l'étape de chauffe ultérieure, en fonction de la présence ou de l'absence de plateaux et/ou de cloches. Cette seconde séquence de programme peut avantageusement générer des signaux mémorisés permettant d'inhiber l'alimentation ultérieure des groupes de bobines placés immédiatement au-dessus et au-dessous d'une zone dépourvue de couche supérieure amovible de matériau réchauffable par induction magnétique.

Les moyens de commande 34 comprennent une troisième séquence de programme, générant les signaux de commande du dispositif de commutation 35 en fonction desdits signaux mémorisés, au cours de.l'étape ultérieure de chauffe. Au cours de cette étape, les commutateurs 31, 32, 36 et 37 restent ouverts, dans l'exemple de la figure 1. De la sorte, les aliments 38 placés sur le plateau 2 dans la zone de réchauffage du plateau ne sont pas chauffés, la couche inférieure 10 de matériau réchauffable par induction magnétique n'étant pas soumise à une induction magnétique produite par le groupe de bobines d'induction adjacentes 24 non alimenté. De même les groupes de bobines d'induction 20, 27 et 29 ne seront pas alimentés.

On comprend que ce dispositif permet de détecter de façon automatique la présence ou l'absence d'un plateau, par exemple l'absence du plateau entre les tablettes 15 et 17.

Le dispositif permet en outre, ou en alternative, de détecter l'absence d'une cloché sur un plateau tel que le plateau intermédiaire 2, et d'en déduire que les aliments portés par ce plateau ne doivent pas être chauffés.

Il en résulte que le dispositif s'adapte automatiquement à la volonté de l'utilisateur, qui peut disposer un nombre variable de plateaux, et qui peut commander très facilement le réchauffage ou le non réchauffage de certains plateaux choisis en plaçant ou en ne plaçant pas une cloche dans la zone de réchauffage des plateaux choisis.

Selon une possibilité avantageuse, au cours de l'étape ultérieure de chauffe, le moyen de détection 30 et le moyen de commande 34 vérifient en permanence que le courant débité dans chaque groupe de bobines d'induction reste dans une plage de valeurs acceptables. En cas de divergence de valeurs de courant, le moyen de commande 34 peut générer un signal d'alarme.

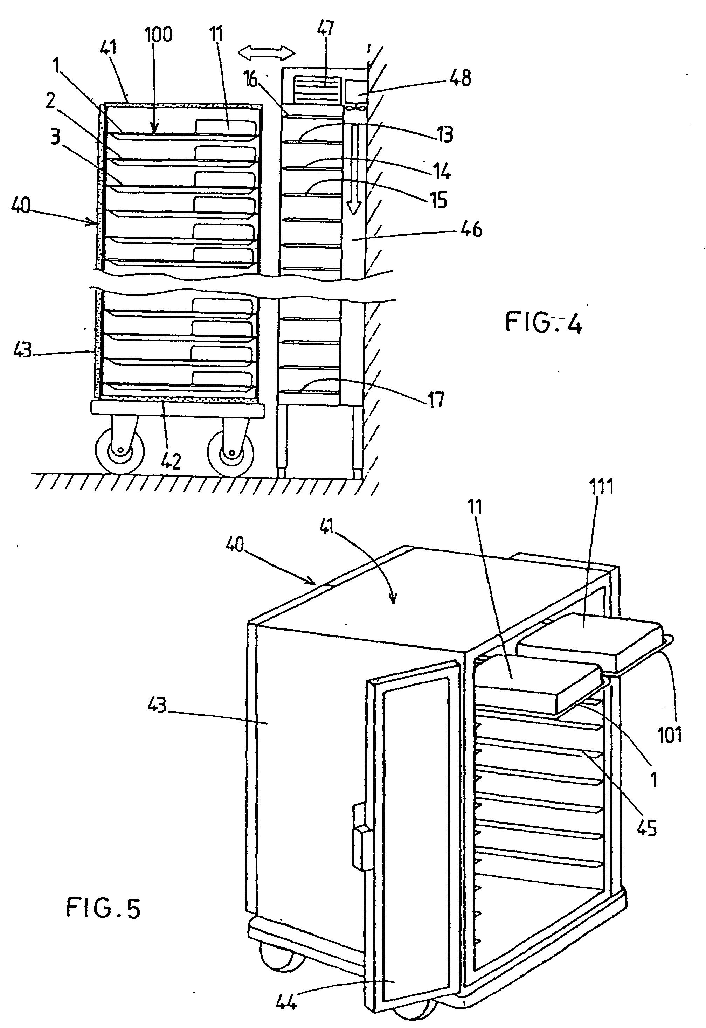

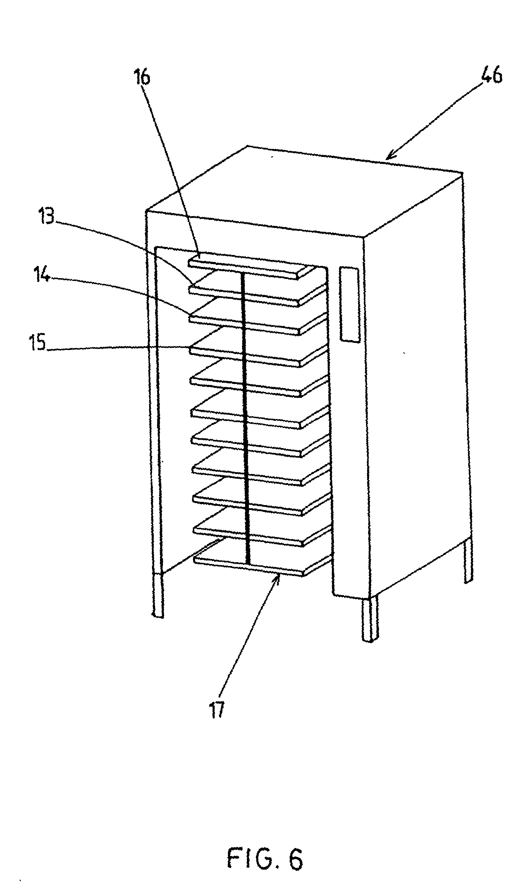

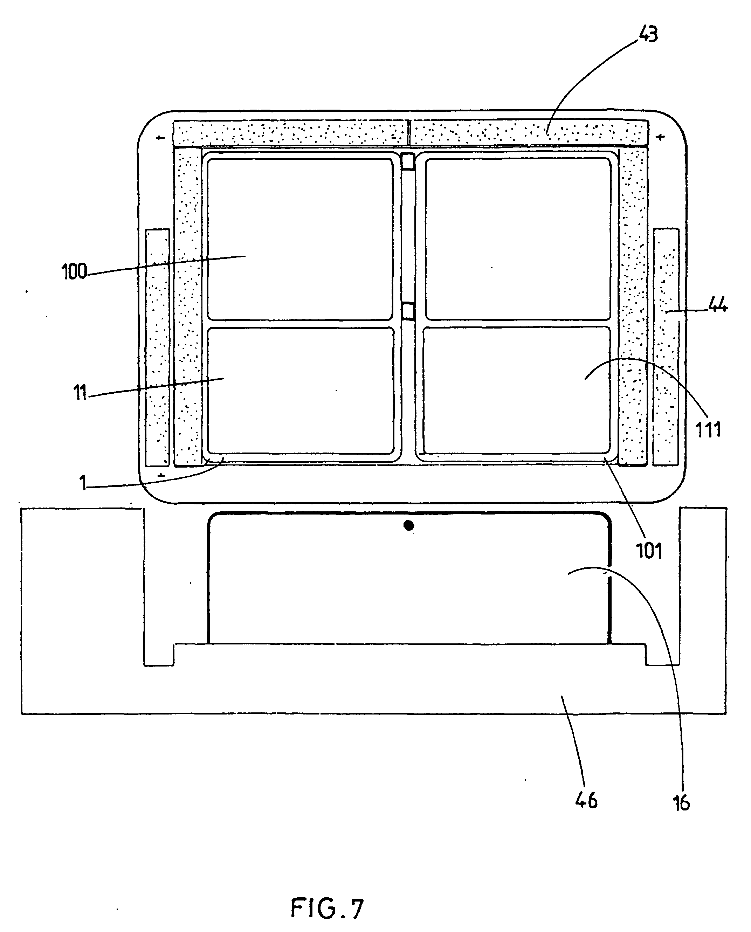

Dans le mode de réalisation avantageux illustré sur les figures 4 à 7, le dispositif de mise à température selon l'invention est adapté en particulier pour la distribution de plateaux repas dans les collectivités telles que les hôpitaux.

Dans ce cas, les moyens pour supporter la série de plateaux comprennent un chariot 40 mobile de transport des plateaux 1, 2 et 3, le chariot étant fermé par des parois supérieure 41, inférieure 42 et par une paroi périphérique 43 comportant au moins une porte frontale 44. On peut par exemple prévoir un chariot 40 permettant, à chaque étage, de placer côte à côte deux plateaux tels que les plateaux 1 et 101, pouvant porter des cloches telles que les cloches 11 et 111. Les plateaux sont montés sur des glissières 45, permettant de les faire coulisser longitudinalement pour le service. En position d'accouplement pour la remise en température, le chariot 40 vient s'engager contre une console fixe 46, ouverte sur le devant, et portant les générateurs d'induction tels que les générateurs d'induction 16, 13, 14, 15 et 17 en forme de tablette. La console fixe 46 est adaptée pour recevoir la face frontale ouverte du chariot 40. Dans la position d'accouplement, les générateurs d'induction successifs 13-17 de la console 46 viennent s'engager à l'intérieur du chariot 40 entre les zones de réchauffage des plateaux.

Dans la réalisation représentée, les plateaux tels que le plateau 1 comprennent une zone de réchauffage recouverte par une cloche telle que la cloche 11, et une zone de maintien au. froid telle que la zone 100 placée à l'écart de la face frontale ouverte du chariot 40. La console 46 comprend un générateur d'air froid 47 et des moyens de circulation d'air 48 pour faire circuler l'air froid dans le chariot 40 pour amener l'air froid sur la zone de maintien au froid 100 des plateaux tels que le plateau 1.

Un mode de réalisation simplifié consiste à prévoir, dans chaque générateur d'induction, seulement des groupes de bobines d'induction inférieurs, adaptées pour échauffer par induction des éléments en matériau réchauffables par induction magnétique placés dans des cloches couvrant les aliments.

Egalement, les générateurs d'induction peuvent comprendre des groupes de bobines coplanaires en forme de tablette, comme représenté, et/ou des bobines réparties latéralement en périphérie sur trois côtés de la zone occupée par la cloche couvrant les aliments.

La présente invention n'est pas limitée aux modes de réalisation qui ont été explicitement décrits, mais elle en inclut les diverses variantes et généralisations contenues dans le domaine des revendications ci-après.

## Revendications

1. Dispositif de mise à température d'aliments (4, 5) disposés sur des plateaux repas (1, 2, 3), comprenant:
- des moyens (40) pour supporter une série de plateaux (1, 2, 3) les uns au-dessus des autres selon un écartement (E) approprié, les aliments à réchauffer (4, 5) pouvant être disposés sur chaque plateau correspondant (1, 3) en une zone de réchauffage des plateaux,
- une pluralité de générateurs d'induction (13, 14, 15, 16, 17), contenant chacun au moins un groupe de bobines d'induction (20, 25, 27, 28 ; 19, 24, 26, 29) connecté à un générateur électrique (18) de courant haute fréquence et engagé à proximité des plateaux successifs (1, 2, 3) dans la zone de réchauffage des plateaux, pour produire un champ magnétique alternatif haute fréquence provoquant le réchauffage d'éléments (6, 7, 8, 9) en matériau réchauffable par induction magnétique placés à proximité des aliments,
**caractérisé en ce que** :
- les groupes de bobines d'induction de chaque générateur d'induction (13, 14, 15, 16, 17) sont alimentés en énergie électrique haute fréquence séparément des groupes de bobines d'induction des autres générateurs d'induction,
- un moyen de détection (30) est associé au moins à certains groupes de bobines d'induction contrôlés de générateurs d'induction (13, 14, 15, 16, 17), pour détecter la présence ou l'absence d'un élément adjacent correspondant en matériau réchauffable par induction magnétique (6, 7, 8, 9),
- des moyens de commande et de commutation (34, 35) inhibent automatiquement l'alimentation des groupes de bobines d'induction pour lesquels le moyen de détection (30) a détecté l'absence d'un élément adjacent correspondant de matériau réchauffable par induction magnétique (6, 7, 8, 9).

2. Dispositif selon la revendication 1, **caractérisé en ce que** le moyen de détection (30) comprend des moyens de mesure et de comparaison du courant débité par le générateur électrique (18) dans chaque groupe de bobines d'induction contrôlé, adaptés pour générer un signal de présence lorsque le courant est compris dans une première plage de valeurs normales de courant en présence d'un élément adjacent correspondant en matériau réchauffable par induction magnétique (6-9), et adaptés pour générer un signal d'absence lorsque le courant est compris dans une seconde plage de valeurs normales de courant en l'absence d'un élément adjacent correspondant en matériau réchauffable par induction magnétique (6-9).

3. Dispositif selon l'une des revendications 1 ou 2, **caractérisé en ce qu'**un dispositif de multiplexage (34, 35) est inséré électriquement entre les groupes de bobines d'induction (19, 20, 24-29) et un ou plusieurs générateurs électriques de courant haute fréquence (18), le dispositif de multiplexage (34, 35) étant agencé pour alimenter les groupes de bobines d'induction séparément en séquence. en conservant une charge sensiblement constante de chaque générateur électrique (18) quelque soit le nombre de bobines d'induction à alimenter.

4. Dispositif selon l'une quelconque des revendications 1 à 3, **caractérisé en ce que** les moyens de commande (34) sont adaptés pour inhiber l'alimentation de certains groupes de bobines d'induction au choix de l'utilisateur.

5. Dispositif selon l'une quelconque des revendications 1 à 4, **caractérisé en ce que** :
- les générateurs d'induction comprennent au moins des groupes de bobines d'induction inférieures associées à des éléments- conducteurs du champ magnétique (21) placés au-dessus des bobines d'induction inférieures,
- les groupes de bobines d'induction contrôlés sont les groupes de bobines d'induction inférieures,
- sur chaque plateau, les aliments que l'on désire réchauffer (4, 5) sont en outre placés sous une couche supérieure amovible de matériau réchauffable par induction magnétique (8, 9).

6. Dispositif selon la revendication 5, **caractérisé en ce que** les couches supérieures (8, 9) amovibles de matériau réchauffable par induction magnétique sont placées en partie inférieure de cloches (11, 12) en matière isolante recouvrant la zone de réchauffage des plateaux (1, 3).

7. Dispositif selon l'une quelconque des revendications 1 à 6, **caractérisé en ce que** :
- les générateurs d'induction comprennent des groupes de bobines d'induction supérieures (19, 24, 26, 29) associées à des éléments conducteurs du champ magnétique (21) placés au-dessous des bobines d'induction supérieures,
- chaque plateau comporte dans sa zone de réchauffage, un élément en matériau réchauffable par induction magnétique:

8. Dispositif selon l'une quelconque des revendications 5 à 7, **caractérisé en ce que** les éléments conducteurs du champ magnétique (21) comprennent au moins trois barreaux de ferrite (21a, 21b, 21c) disposés en étoile depuis le centre (22) de chaque bobine d'induction correspondante jusqu'à sa périphérie (23).

9. Dispositif selon l'une quelconque des revendications 1 à 8, **caractérisé en ce que** :
- les moyens pour supporter la série de plateaux (1, 2, 3) comprennent un chariot mobile (40) de transport de plateaux, fermé par des parois supérieure (41) et inférieure (42) et par une paroi périphérique (43) comportant au moins une porte frontale (44),
- les générateurs d'induction (13-17) sont placées sur une console fixe (46) adaptée pour recevoir la face frontale ouverte du chariot (40) en une position d'accouplement dans laquelle les zones de réchauffage des plateaux viennent s'engager entre les générateurs d'induction successifs (13-17).

10. Dispositif selon la revendication 9, **caractérisé en ce que**:
- les plateaux (1, 2, 3) comportent une zone de maintien au froid (100), placée à l'écart de la face frontale ouverte du chariot (40),
- la console fixe (46) comprend un générateur d'air froid (47) et des moyens (48) pour faire circuler l'air froid dans le chariot (40) pour amener l'air froid sur la zone de maintien au froid (100) des plateaux (1, 2, 3).

## Claims

1. Device for heating foods (4, 5) placed on meal trays (1, 2, 3), comprising :
- means (40) for supporting a series of trays (1, 2, 3) one above the other with an appropriate distance (E) between them, foods to be heated (4, 5) being placed on a tray heating area on a respective tray (1, 3),
- a plurality of induction generators (13, 14, 15, 16, 17), each containing at least one group of induction coils (20, 25, 27, 28 ; 19, 24, 26, 29) connected to a high-frequency electrical current generator (18) and disposed near said tray heating area of successive trays (1, 2, 3), to produce a high-frequency alternating magnetic field heating members (6, 7, 8, 9) of material that can be heated by magnetic induction placed near said foods,
**characterized in that** :
- said groups of induction coils of each induction generator (13, 14, 15, 16, 17) are energized with high-frequency electrical power separately from said groups of induction coils of the other induction generators,
- a detector means (30) is associated with at least some groups of controlled induction coils of induction generators (13, 14, 15, 16, 17), to detect the presence or the absence of a corresponding adjacent member of material that can be heated by magnetic induction (6, 7, 8, 9),
- control and switching means (34, 35) automatically disable the energization of groups of induction coils for which said detector means (30) have detected the absence of a corresponding adjacent member of material that can be heated by magnetic induction (6, 7, 8, 9).

2. Device according to claim 1, **characterized in that** said detector means (30) comprises means for measuring and comparing a current flowing from said electrical generator (18) into each group of controlled induction coils, adapted to generate a "present" signal when said current is in a first range of current values that are normal in the presence of the corresponding adjacent member of material that can be heated by magnetic induction (6-9), and adapted to generate an "absent" signal when said current is in a second range of current values that are normal in the absence of a corresponding adjacent member of material that can be heated by magnetic induction (6-9).

3. Device according to claims 1 or 2, **characterized in that** a multiplexing device (34, 35) is electrically inserted between said groups of induction coils (19, 20, 24-29) and one or more high-frequency electrical current generators (18), said multiplexing device (34, 35) being adapted to energize said groups of induction coils separately and in sequence to maintain a substantially constant load on each electrical generator (18) regardless of the number of induction coils to be energized.

4. Device according to any one of claims 1 to 3, **characterized in that** said control means (34) are adapted to disable the energization of some groups of induction coils selected by the user.

5. Device according to any one of claims 1 to 4, **characterized in that** :
- said induction generators comprise at least groups of bottom induction coils associated with members that conduct magnetic field (21) disposed above said bottom induction coils,
- said groups of controlled induction coils are said groups of bottom induction coils,
- the foods to be heated (4, 5), on each tray, are further placed under a removable top layer of material that can be heated by magnetic induction (8, 9).

6. Device according to claim 5, **characterized in that** said removable top layers (8, 9) of material that can be heated by magnetic induction are disposed on the inside of insulative material dish-covers (11, 12) covering said tray heating area (1, 3).

7. Device according to any one of claims 1 to 6, **characterized in that** :
- said induction generators comprise groups of top induction coils (19, 24, 26, 29) associated with members that conduct magnetic field (21) disposed under said top induction coils,
- each tray includes in its heating area, a member of material that can be heated by magnetic induction.

8. Device according to any one of claims 5 to 7, **characterized in that** said members that conduct magnetic field (21) comprise at least three ferrite rods (21a, 21b, 21c) radiating from the center (22) of each corresponding induction coil to its periphery (23).

9. Device according to any one of claims 1 to 8, **characterized in that** :
- said means for supporting said series of trays (1, 2, 3) comprise a mobile trolley (40) for transporting trays, closed by top (41) and bottom (42) walls and by a peripheral wall (43) including at least one front door (44),
- said induction generators (13-17) are placed on a fixed cabinet (46) adapted to receive the open front face of said trolley (40) in a coupled position in which said tray heating areas are inserted between successive induction generators (13-17).

10. Device according to claim 9, **characterized in that** :
- said trays (1, 2, 3) include a cool area (100), away from said open front face of said trolley (40),
- said fixed cabinet (46) includes a cool air generator (47) and means (48) for circulating cool air in said trolley (40) to direct said cool air onto said cool area (100) of said trays (1, 2, 3).

## Patentansprüche

1. Vorrichtung zum Erwärmen von Lebensmitteln (4, 5), die auf einem Speisetablett (1, 2, 3) angeordnet sind, mit :
- Mitteln (40) zum Tragen einer Reihe von Tabletts (1, 2, 3) übereinander mit einem geeigneten Zwischenraum (E), wobei die zu erwärmenden Lebensmittel (4, 5) auf jedes entsprechende Tablett (1, 3) in einer Erwärmungszone des Tabletts angeordnet werden können,
- einer Vielzahl von Induktionsgeneratoren (13, 14, 15, 16, 17), von denen jeder mindestens eine Gruppe von Induktionsspulen (20, 25, 27, 28; 19, 24, 26, 29) aufweist, die an einen elektrischen Generator (18) mit Hochfrequenzstrom angeschlossen sind und in der Nähe der aufeinanderfolgenden Tabletts (1, 2, 3) in der Erwärmungszone der Tabletts liegen, um ein magnetisches Wechselfeld mit hoher Frequenz zu erzeugen, das die Erwärmung von Elementen (6, 7, 8, 9) aus durch magnetische Induktion erwärmbaren Materialien, die in der Nähe der Lebensmittel liegen, zu bewirken,
**dadurch gekennzeichnet, daß** :
- Gruppen von Induktionsspulen jedes Induktionsgenerators (13, 14, 15, 16, 17) mit elektrischer Hochfrequenzenergie getrennt von Gruppen von Induktionsspulen der anderen Induktionsgeneratoren gespeist werden,
- ein Detektionsmittel (30) mindestens bestimmten Gruppen von Induktionsspulen, die von den Induktionsgeneratoren (13, 14, 15, 16, 17) gesteuert werden, zugeordnet ist, um die Anwesenheit oder Abwesenheit eines in der Nähe befindlichen Elementes (6, 7, 8, 9) aus dem durch magnetische Induktion erwärmbare Material zu erfassen,
- Steuerungs- und Umschaltmittel (34, 35) automatisch die Speisung der Gruppen von Induktionsspulen unterbinden, für die die Detektionsmittel (30) die Abwesenheit eines nahegelegenen Elementes (6, 7, 8, 9) aus durch magnetische.Induktion erwärmbarem Material festgestellt haben.

2. Vorrichtung nach Anspruch 1, **dadurch gekennzeichnet, daß** die Detektionsmittel (30) Mittel zum Messen und zum Vergleich des von dem elektrischen Generator (18) zu jeder gesteuerten Gruppe von Induktionsspulen gelieferten Stromes aufweisen und so ausgebildet sind, daß sie ein Anwesenheitssignal erzeugen, wenn der Strom in einem ersten Bereich von normalen Stromwerten bei Anwesenheit eines nahegelegenen Elementes (6-9) aus durch magnetische Induktion erwärmbaren Materialien liegt, und so ausgebildet ist, daß es ein Abwesenheitssignal liefert, wenn der Strom in einem zweiten Bereich von normalen Stromwerten bei Abwesenheit eines nahegelegenen Elementes (6-9) aus durch magnetische Induktion erwärmbaren Materialien liegt.

3. Vorrichtung nach einem der Ansprüche 1 oder 2, **dadurch gekennzeichnet, daß** eine Multiplexanordnung (34, 35) elektrisch zwischen die Gruppen von Induktionsspulen (19, 20, 24-29) und einen oder mehreren elektrischen Generatoren mit Hochfrequenzstrom (18) geschaltet sind, wobei die Multiplexanordnungen (34, 35) zum separaten Speisen der Gruppen von Induktionsspulen in einer Sequenz getrieben werden, wobei sie eine im wesentlichen konstante Ladung jedes elektrischen Generators (18) unabhängig von der Anzahl der zu speisenden Induktionsspulen aufrechterhalten.

4. Vorrichtung nach irgendeinem der Ansprüche 1 bis 3, **dadurch gekennzeichnet, daß** die Steuerungsmittel (34) zum Unterbinden der Speisung bestimmter Gruppen von Induktionsspulen nach Wahl des Benutzers ausgebildet sind.

5. Vorrichtung nach irgendeinem der Ansprüche 1 bis 4, **dadurch gekennzeichnet, daß** :
- die Induktionsgeneratoren mindestens Gruppen von unteren Induktionsspulen aufweisen, die Leitelementen (21) für das magnetische Feld zugeordnet sind, die oberhalb von unteren Induktionsspulen angeordnet sind,
- die Gruppen von gesteuerten Induktionsspulen die Gruppen von unteren Induktionsspulen sind,
- auf jedem Tablett die zu erwärmenden Lebensmittel (4, 5) zusätzlich unter einem oberen abnehmbaren Deckel aus einem durch magnetische Induktion erwärmbaren Material (8, 9) angeordnet sind.

6. Vorrichtung nach Anspruch 5, **dadurch gekennzeichnet, daß** die oberen abnehmbaren Deckel (8, 9) aus durch magnetische Induktion erwärmbarem Material teilweise unterhalb von Glocken (11, 12) aus isolierendem Material angeordnet sind, die die Erwärmungszone der Tabletts (1, 3) überdecken.

7. Vorrichtung nach irgendeinem der Ansprüche 1 bis 6, **dadurch gekennzeichnet, daß** :
- die Induktionsgeneratoren Gruppen von oberen Induktionsspulen (19, 24, 26, 29) aufweisen, die den Leitelementen (21) für das magnetische Feld zugeordnet sind und unterhalb der oberen Induktionsspulen angeordnet sind,
- jedes Tablett in seiner Erwärmungszone ein Element aus durch magnetische Induktion erwärmbaren Materialien aufweist.

8. Vorrichtung nach irgendeinem der Ansprüche 5 bis 7, **dadurch gekennzeichnet, daß** die Leitelemente (21) für magnetisches Feld mindestens drei Ferritkerne (21a, 21b, 21c) aufweisen, die sternförmig zwischen der Mitte (22) jeder zugeordneten Induktionsspule bis zu deren Umfang (23) angeordnet sind.

9. Vorrichtung nach irgendeinem der Ansprüche 1 bis 8, **dadurch gekennzeichnet, daß** :
- die Mittel zum Tragen einer Reihe von Tabletts (1, 2, 3) einen mobilen Transportwagen (40) für Tabletts aufweisen, der durch obere Wand (41) und untere Wand (42) und eine Seitenwand (43) geschlossen ist, die mindestens eine Fronttür (44) trägt,
- die Induktionsgeneratoren (13-17) auf einer festen Konsole (46) angeordnet sind, die zur Aufnahme der offenen Vorderseite des Wagens (40) in einer Kupplungsstellung ausgebildet ist, in der die Erwärmungszonen der Tabletts aufeinanderfolgend zwischen die Induktionsgeneratoren (13-17) eingreifen.

10. Vorrichtung nach Anspruch 9, **dadurch gekennzeichnet, daß** :
- die Tabletts (1, 2, 3) eine Kühlhaltezone (100) aufweisen, die im Abstand zur offenen Vorderseite des Wagens (40) angeordnet ist,
- die feste Konsole (46) einen Generator (47) für kalte Luft und Mittel (48) zum Zirkulieren der kalten Luft in dem Wagen (40) aufweist, um die kalte Luft zur Kühlhaltezone (100) der Tabletts (1, 2, 3) zu liefern.
